(19) **Europäisches Patentamt**
**European Patent Office**
**Office européen des brevets**

(11) **EP 1 655 573 B1**

(12) **EUROPEAN PATENT SPECIFICATION**

(45) Date of publication and mention
of the grant of the patent:
**11.07.2012 Bulletin 2012/28**

(51) Int Cl.:
**G01C 15/00** (2006.01)    **G01C 1/04** (2006.01)

(21) Application number: **04771823.4**

(22) Date of filing: **12.08.2004**

(86) International application number:
**PCT/JP2004/011862**

(87) International publication number:
**WO 2005/017644 (24.02.2005 Gazette 2005/08)**

(54) **3-DIMENSIONAL MEASUREMENT DEVICE AND ELECTRONIC STORAGE MEDIUM**

3D-MESSGERÄT UND ELEKTRONISCHES SPEICHERMEDIUM

DISPOSITIF DE MESURE A TROIS DIMENSIONS ET SUPPORT DE STOCKAGE ELECTRONIQUE

(84) Designated Contracting States:
**AT BE BG CH CY CZ DE DK EE ES FI FR GB GR HU IE IT LI LU MC NL PL PT RO SE SI SK TR**

(30) Priority: **13.08.2003 JP 2003207528**

(43) Date of publication of application:
**10.05.2006 Bulletin 2006/19**

(73) Proprietor: **Kabushiki Kaisha TOPCON Tokyo 174-8580 (JP)**

(72) Inventor: **OHTANI, Hitoshi Itabashi-ku, Tokyo 174-8580 (JP)**

(74) Representative: **Lang, Johannes et al Bardehle Pagenberg Prinzregentenplatz 7 81675 München (DE)**

(56) References cited:
**EP-A1- 1 329 690     EP-A2- 1 219 925 WO-A1-00/25089     DE-A1- 19 922 341 JP-A- 2000 329 556     JP-A- 2001 099 647 JP-A- 2001 280 956     JP-A- 2002 202 124 US-B2- 6 559 931**

**Description**

Technical Field

The present invention relates to three-dimensional survey systems (and like systems) for computing three-dimensional coordinate data using a survey apparatus and image acquisition devices, and more particularly, to a three-dimensional survey system capable of making stereographic displays by determining positions of tie points using a survey apparatus.

Background Art

EP 1219925 (A2) discloses a surveying apparatus with a picking-up device and an electronic storage medium, and particularly a surveying apparatus capable of combining a background image captured by a picking-up device with survey data obtained by the surveying apparatus and displaying the combined image on a display unit, wherein the surveying apparatus is configured such that the picking-up device can be connected to the surveying apparatus.

US 2003048438 (A1) discloses a 3-D coordinate measurement which is performed in such a way that an electrooptical distance-measuring device is used to measure a linear distance to a target point set on a surface of a measurement object, an angle measuring device is used to measure shifted angles of an optical axis of the electrooptical distance-measuring device, and a 3-D coordinate of the target point is measured according to a measured distance and a measured angle after the optical axis of the electrooptical distance-measuring device has been aligned to the target point.

In conventional methods, image acquisition means (for example, digital cameras) and a reference structure of known dimensions are used to obtain three-dimensional coordinates from image data. The reference structure is rested near the object to be selected as a measurement target, and images of this reference structure are acquired from two or more directions with the cameras. These cameras have an inclinometer for measuring longitudinal/lateral inclinations of images. The reference structure is of known dimensions, and for example, a triangular structure is used as the reference structure. Previously surveyed positions are selected as camera-photographing positions and a position at which the reference structure is to be rested.

Photographing from the above photographing positions is conducted in the composition where an image of the object selected as the measurement target, and an image of the reference structure will be formed at the same time. The relationship between the reference structure, the photographing position, and the position on the acquired image, is derived by absolute orientation, and three-dimensional coordinates of the object as the measurement target, are calculated.

However, a reference structure of known dimensions, or the like, must be installed beforehand to conduct the above absolute orientation in the conventional methods. Also, the installation position for the reference structure and the camera-photographing positions must be surveyed. There have been the problems that it is very troublesome to perform surveys as well as to place the reference structure and install the cameras, and that if the structure is a building, it is usually very large and requires much more troublesome operations. Additionally, there have been the problems that before a photographing altitude can be measured, an inclinometer for detecting inclinations must be provided on the camera, and that a special camera that permits this is extremely expensive.

Disclosure of Invention

The present invention was made with the above problems in view, and the invention has a survey apparatus for measuring a position of a collimation target from distance and angle data, and image acquisition devices each for acquiring images of an object to be measured, inclusive of an image of the collimation target, from different plural directions. The present invention further includes: arithmetic processing means that matches, by using the collimation target as a tie point, the images that have been acquired by the image acquisition devices, relates the collimation target position that has been measured by the survey apparatus, and the collimation target in each of the matched images, and computes three-dimensional coordinate data of the object to be measured, in accordance with above-related data.

The present invention is also constructed so that: the survey apparatus when placed at a known point measures positions of at least six collimation targets, and the arithmetic processing means conducts corrections for inclinations or rotational angle errors of the image acquisition devices, calculates positions of the image acquisition devices from the position of the collimation target and the images acquired from the image acquisition devices, and computes three-dimensional coordinate data of the object to be measured, the coordinate data having been acquired by the image acquisition devices.

Additionally, the collimation target(s) in the present invention can be formed of a retroreflective material and constructed so that a mark that facilitates collimation is formed on the surface of the material.

Furthermore, the present invention can be a three-dimensional survey apparatus in which the mark is constituted by a marker section identifiable from image data of image acquisition devices, and by a symbol that an operator can identify.

Moreover, the mark in the present invention can also be constituted by the cross hairs that facilitate collimation, a visually identifiable character, and an electrically readable code.

The visually identifiable character can be made into a numeric one, and the electrically readable code into a bar code.squill.

Furthermore, a three-dimensional survey method according to the present invention includes the features of claim 3.

Furthermore, an electronic storage medium according to the present invention is constructed to have a program stored inside to lay down procedural steps of claim 4.

Brief Description of Drawings

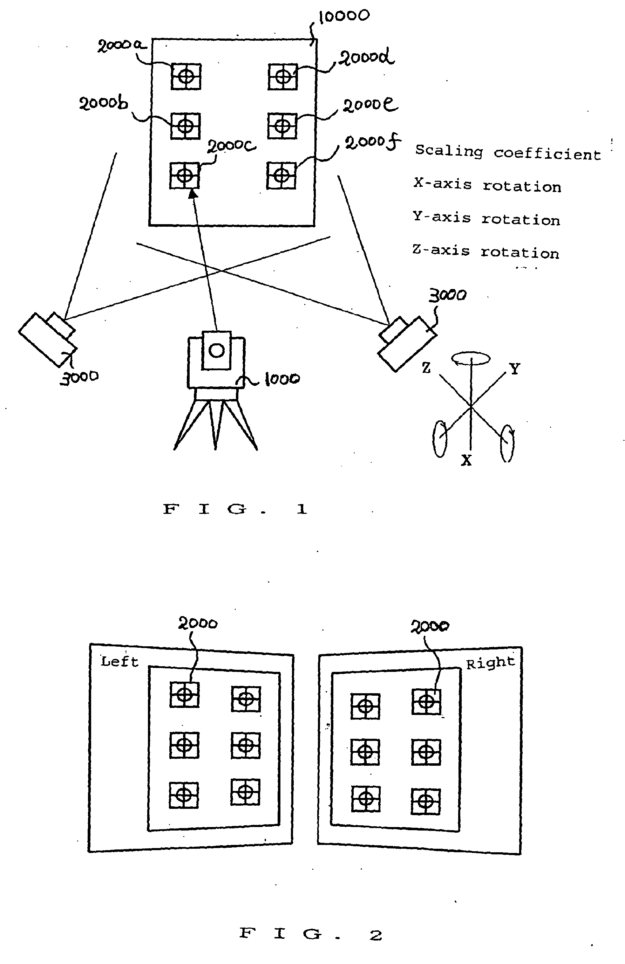

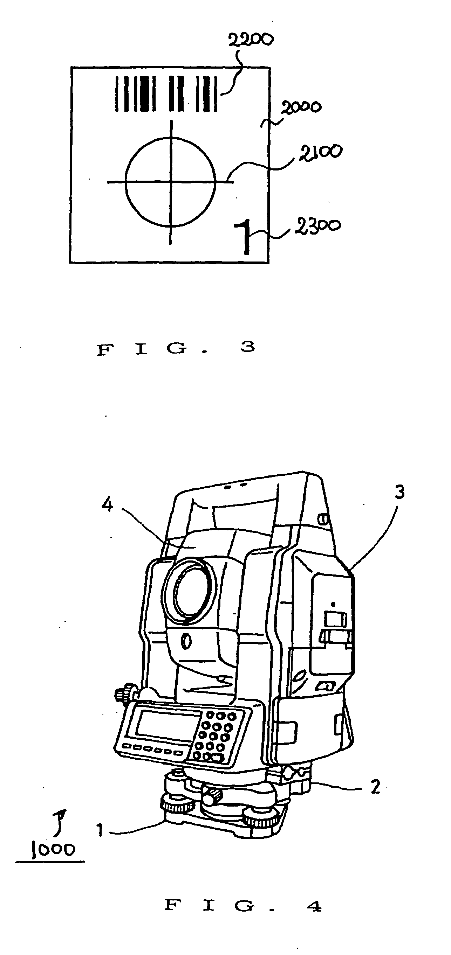

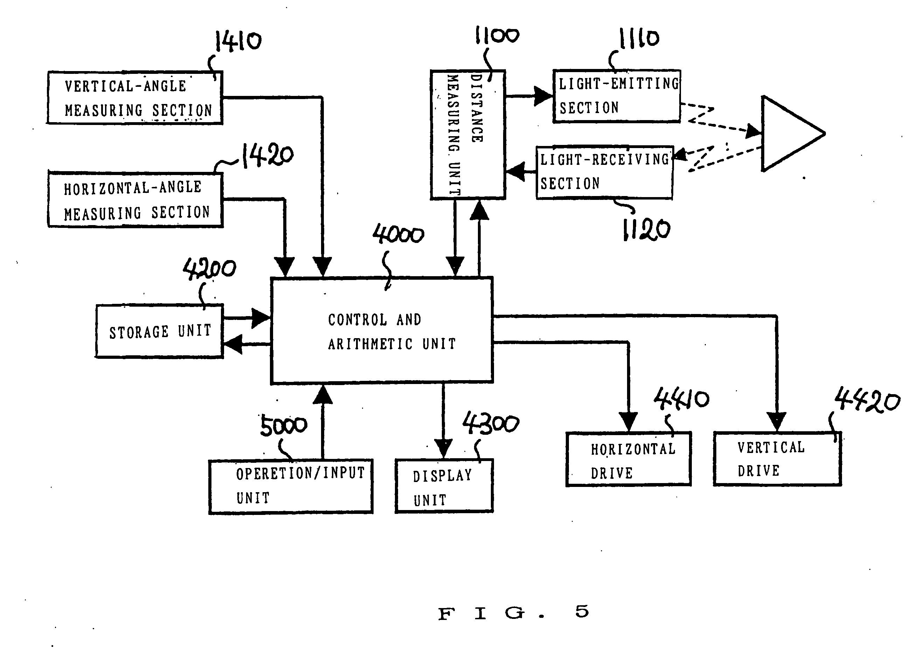

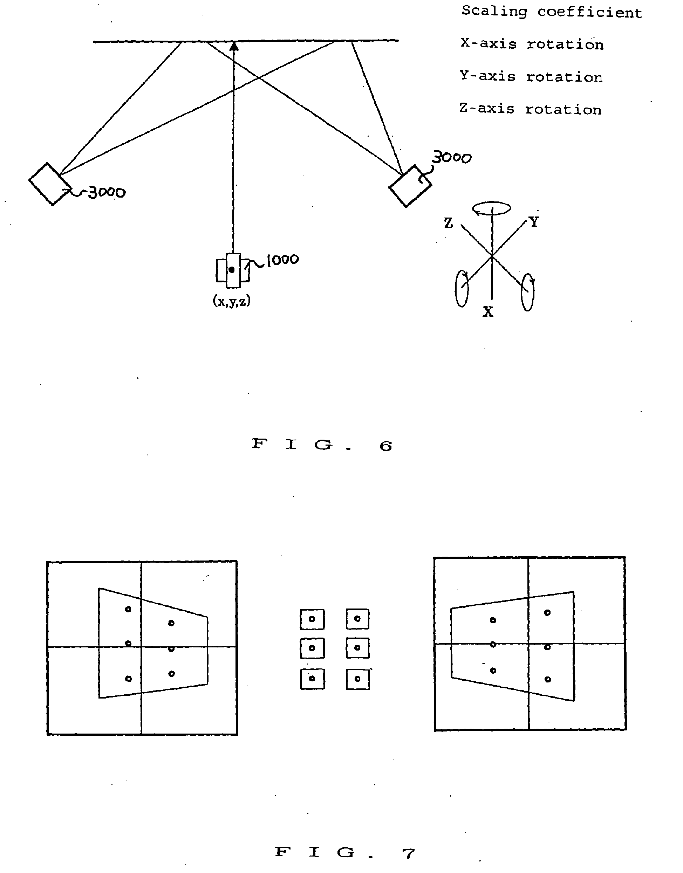

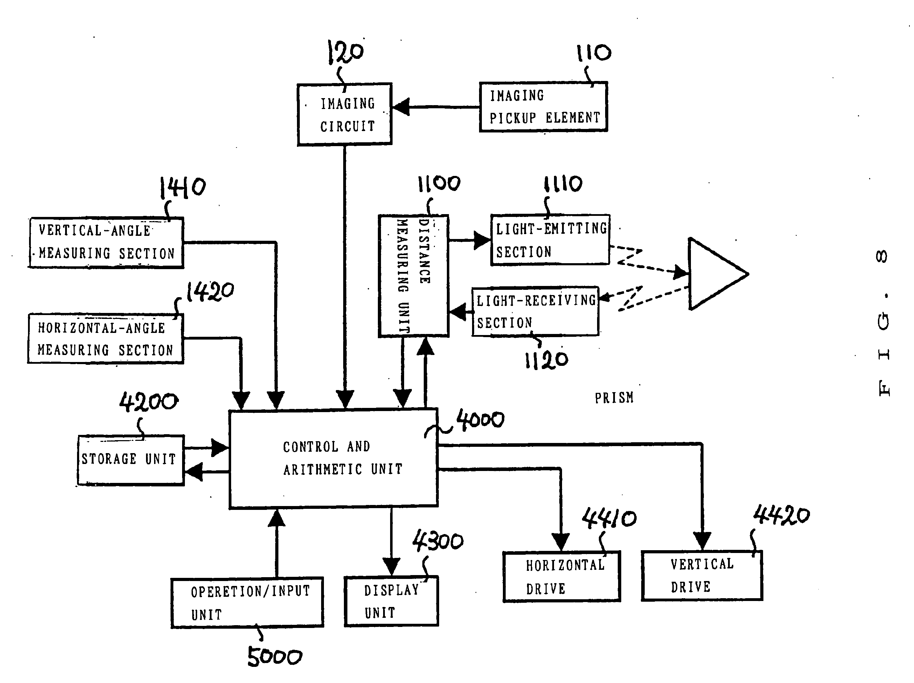

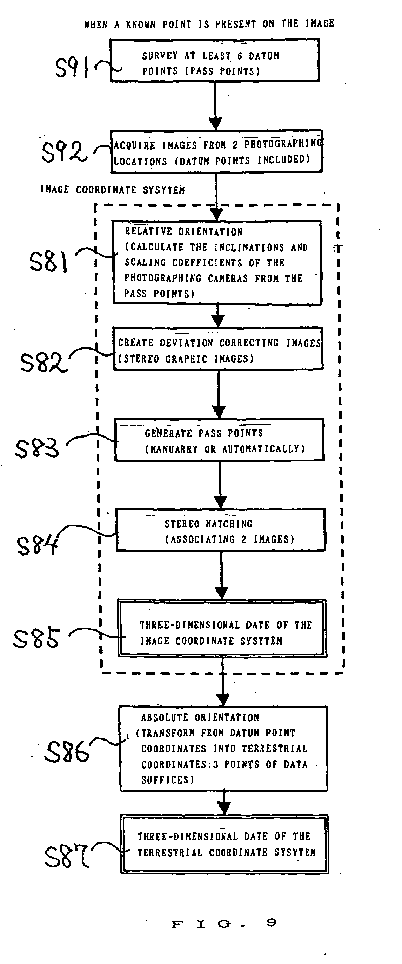

Fig. 1 is a diagram explaining a first embodiment of the present invention. Fig. 2 is another diagram explaining the first embodiment of the present invention. Fig. 3 is a diagram explaining a target mark 2000 in the first embodiment. Fig. 4 is a diagram explaining a survey machine 1000 in the first embodiment. Fig. 5 is a diagram explaining a configuration of the survey machine 1000 in the first embodiment. Fig. 6 is a diagram explaining an example not using target marks as pass points. Fig. 7 is another diagram explaining the example. Fig. 8 is a diagram explaining a configuration of the survey machine 1000 used in the example. Fig. 9 is a diagram that explains operation of the example.

Best Mode for Carrying out the Invention

[Embodiments]

Embodiments of the present invention are described hereunder in accordance with the accompanying drawings.

(First Embodiment)

A first embodiment is a three-dimensional survey system that uses target marks 2000 as pass points.

A total station that can measure distances up to reflection prisms placed at land survey points is used as a survey machine 1000. Also, the target marks 2000 are used that are drawn on a reflection sheet so that the marks can be used as pass points of stereographic images and instead of reflection prisms.

The first embodiment is described below using Fig. 1.

A target mark 2000a, 2000b, 2000c, 2000d, 2000e, or 2000f is rested in or attached (using an adhesive or the like) to at least six positions on an object to be measured (hereinafter, referred to as the measurement target 10000). The six positions are taken as pass points of the measurement target 10000.

For stereographing from any two lateral positions, cameras are rotated longitudinally and laterally from respective centers of the cameras, i.e., in directions of three optical axes (X-axis, Y-axis, and Z-axis). The resulting inclinations of the cameras are expressed as ($\omega$, $\phi$ $\kappa$: roll, pitch, and yaw, respectively).

To solve these parameters as variables, six pass points that are mathematically known are required.

Next, a survey machine 1000 is installed at a known point distant from the measurement target 10000, the known point being a position at which the target marks 2000 are to be measured. The known point in this case is a point derived by use of a GPS-equipped device, survey datum points, and/or the like, and having a coordinate position inclusive of height.

A tripod is placed on the known point, then the survey machine 1000 is installed on the tripod, and machine height is measured. The machine height is an actual height for surveying.

A second known point is collimated with the survey machine 1000, and this point is taken as a datum point for measuring a horizontal angle. After the collimation, the target marks 2000a to 2000f are collimated and then surveyed to obtain horizontal angles, altitude angles, and distances between the target marks.

Coordinate positions of the target marks 2000a to 2000f are determined by the distance from the known point at which the survey machine 1000 is installed, to the second known point, distances from the known point to each of the target marks 2000a to 2000f, and the respective horizontal angles and altitude angles from the datum point.

Next, as shown in Fig. 2, the target marks 2000a to 2000f, together with the measurement target 10000, are photographed from at least two directions (left/right) using digital cameras 3000.

Relative orientation for deriving a relationship in relative position between the digital cameras 3000 that have acquired images from the left/right directions is conducted with the target marks 2000a to 2000f as pass points.

During the relative orientation, the relationship in relative position between the digital cameras 3000 that have acquired the left/right images can be derived by specifying tie points (pass points) of the left/right images. This makes it possible to define a three-dimensional coordinate system with an optical axis of the left camera as its center, and hence to define a three-dimensional coordinate system with an optical axis of one digital camera 3000 as its center.

The coordinate positions of the pass points that were obtained during surveying with the survey machine 1000 are assigned to the model coordinate system that was obtained from the relative orientation, and then this model coordinate system is transformed into a terrestrial coordinate system by conducting absolute orientation.

The absolute orientation here is an operation of transforming the model coordinate system that was obtained from the relative orientation, into a terrestrial coordinate system. The transformation can be conducted by assigning terrestrially measured three-dimensional coordinate data to the points on the images.

The photographs that were obtained using the digital cameras 3000 are central projection photographs whose centers and peripheries differ in scaling coefficient. After absolute orientation, the resulting images are transformed into ortho-images that are parallel projected images.

The ortho-images are described here. Whereas the camera-obtained photographs are central projection photographs, the central projection photographs further generated by oblique orthogonal projection are called orthophotos. Each of the central projection photographs was obtained through a lens. Unlike a scale of a map, therefore, that of the entire photograph is not uniform. The orthophotos, however, are uniform in scale since they were generated by oblique orthogonal projection, and can therefore be handled similarly to maps.

The images acquired by the digital cameras 3000 are constructed from data of small pixel units, and coordinates are assigned to each of the pixels by relative orientation and absolute orientation. Two-dimensional displays on a display apparatus or the like are shaded according to three-dimensional coordinates. During coordinate conversion, coordinates in pixel units are newly calculated and then displayed in the form of operation such as rotation.

As described above, the present first embodiment relates to a three-dimensional survey system capable of making stereographic displays by computing three-dimensional coordinate data with the survey machine 1000 and the digital cameras 3000.

One example of a relationship between data measured by the survey machine 1000, and an image acquired by one digital camera 3000, is described below.

$$(\text{Formula 1})$$

$$x = -f\frac{a_{11}(X - Xc) + a_{12}(Y - Yc) + a_{13}(Z - Zc)}{a_{31}(X - Xc) + a_{32}(Y - Yc) + a_{33}(Z - Zc)}$$

$$y = -f\frac{a_{21}(X - Xc) + a_{22}(Y - Yc) + a_{23}(Z - Zc)}{a_{31}(X - Xc) + a_{32}(Y - Yc) + a_{33}(Z - Zc)}$$

where "f" is a focal distance of the digital camera 3000, "a" is ($\omega$, $\phi$, $\kappa$: roll, pitch, and yaw, respectively) that denotes an inclination (rotational angles of three axes) of the digital camera 3000, "(X, Y, Z)" is three-dimensional data measured by the survey machine 1000, and "(Xc, Yc, Zc)" denotes position coordinates of the digital camera 3000 with respect to the survey machine 1000.

Fig. 3 is an enlarged view of the target mark 2000. A base thereof is constructed of a retroreflective sheet. The cross hairs 2100 denoting a collimation point, and a circle with the cross hairs in its center, also for facilitating collimation, are drawn on the sheet. Above the circle is drawn a bar code 2200 to make this code easily readable when the target mark is transformed into an image. A numeric character 2300 for a measuring person to identify the target mark 2000 is drawn below the circle.

An adhesive is attached to the reverse of the target mark 2000 so that the mark itself can be attached to any object to be measured. A method of installing the target mark can be combined with a method other than adhesive usage. For example, the target mark can be attached to a magnet on the sheet.

The target mark 2000 is associated with a collimation target, and the circle with the cross hairs 2100 in its center is equivalent to a mark that facilitates collimation.

The bar code 2200 is equivalent to a marker section identifiable from image data of the image acquisition device, and the numeric character 2300 corresponds to a symbol that an operator can identify. The bar code 2200 is further equivalent to an electrically readable code.

As shown in Figs. 4 and 5, the survey machine 1000 is a total station, containing an electronic theodolite for vertical and horizontal angle detection, and an electro-optical.range finder.

In the present embodiment, the survey machine 1000 and the digital cameras 3000 are constructed as independent bodies.

Next, an electrical configuration of the survey machine 1000 in the present embodiment is described below in accordance with Fig. 5.

The survey machine 1000 includes a distance-measuring unit 1100, angle-measuring units 1410 and 1420, a storage unit 4200, a display unit 4300, driving units, 4410 and 4420, a control and arithmetic unit 4000, and an operations/input unit 5000. The storage unit 4200 is for storing data, programs, and the like. Using the display unit 4300 and the operations/input unit 5000 allows a user to operate the survey machine 1000.

An electro-optical range finder is used as the distance-measuring unit 1100. The distance-measuring unit 1100 measures a distance to a distance-measurement target from a phase difference, arrival time difference, and other factors of reflected light. The distance-measuring unit 1100 has a light-emitting section 1110 and a light-receiving section 1120, and distance-measuring light from the light-emitting section 1110 is emitted in a direction of an object to be measured. The distance-measuring unit 1100 is constructed so that the light reflected from the object to be measured will enter the light-receiving section 1120, whereby the distance to the object to be measured is measurable.

More specifically, the distance from the survey machine 1000 to the object to be measured is calculated from a differential time from emission of pulse light from the light-emitting section 1110, to reception of the light by the light-receiving section 1120. The calculation is conducted within the control and arithmetic unit 4000.

The angle-measuring unit 1400 is for calculating a horizontal angle and a vertical angle, and includes a vertical-angle measuring section 1410 and a horizontal-angle measuring section 1420.

The vertical-angle measuring section 1410 can use a vertical-angle encoder, for example, to detect the quantity of vertical rotation from a horizontal or zenith direction. The horizontal-angle measuring section 1420 can use a horizontal-angle encoder, for example, to detect the quantity of horizontal rotation from a reference direction. These encoders are both constituted by, for example, a rotor installed at a pivotal section, and a stator formed at a fixed section.

The angle-measuring unit 1400 that includes the vertical-angle measuring section 1410 and the horizontal-angle measuring section 1420 is adapted to calculate horizontal and vertical angles from detected quantities of horizontal rotation and of vertical rotation.

The driving unit 4400 includes a horizontal drive 4410 and a vertical drive 4420, and can rotate the survey machine 1000 in both horizontal and vertical directions via respective motors.

The control and arithmetic unit 4000 includes a CPU and others, and performs various arithmetic operations.

A program in which is prestored a computing procedure that an arithmetic section 1300 of the survey machine 1000 is to use can be stored onto an electronic storage medium such as an FD, CD, DVD, RAM, ROM, or memory card.

The survey machine 1000, as shown in Fig. 4, includes a telescope 4, a mounting frame 3 that supports the telescope 4 in such a form as to enable its vertical rotation, and a base 2 that supports the mounting frame 3 in such a form as to enable its horizontal rotation. The base 2 is installable on a tripod or the like, via a leveling base 1.

The survey machine 1000 has an operations panel formed as part of the operations/input unit 5000, and a display forming part of the display unit 4300. Furthermore, the telescope 4 has an exposed objective lens.

An example not using target marks 2000 as pass points, is described per Figs. 6 and 7. The example, unlike the first embodiment, has an image acquisition device 100 in a survey machine 1000.

The survey machine 1000 can use the image acquisition device 100 to acquire images of an object present in a collimating direction. A non-prism function that captures direct reflections from natural objects and does not require a reflection prism is used as a distance-measuring function of the survey machine 1000.

As shown in Figs. 6 and 7, the survey machine 1000 collimates any section of an object to be measured, measures a distance to that section, and similarly measures a horizontal angle and a vertical angle. The image acquisition device 100 then acquires an image of a location to be surveyed. Since a collimation point is the center of an optical axis, the collimation point agrees with the center of the image. Survey values and images of at least six positions are acquired since the location to be surveyed forms a pass point.

After the surveys, images are acquired from at least two directions using digital cameras 3000, as in the first embodiment.

Next, acquired images are matched between the digital cameras 3000 and the survey machine 1000. The images are matched by conducting corrections in terms of scaling coefficient, grayscale level, and rotational angle, and associated collimation positions are determined as pass points of the camera images.

The determination of the pass points is followed by relative orientation for deriving a relationship in relative position between the digital cameras 3000 that acquired the images from the respective (left/right) directions. As in the first embodiment, coordinate positions of the pass points which were obtained during surveying with the survey machine 1000 are added and after absolute orientation, the resulting images are transformed into ortho-images.

The image acquisition device 100 used to transform imaging device data into digital data. The image acquisition device 100 is for example, a solid-state image pickup device such as a CCD. The image acquisition device 100 includes an image pickup element 110 constructed by a CCD and/or other elements. and an imaging circuit 120 that forms image signals from output signals of the image pickup element 110.

Next, an electrical configuration of the survey machine 1000 in the present example is described below in accordance with Fig. 8.

The survey machine 1000 includes an image acquisition device 100, a distance-measuring unit 1100, an angle-measuring unit 1400, a storage unit 4200, a display unit 4300, a driving unit 4400, a control and arithmetic unit 4000, and an operations/input unit 5000. The storage unit 4200 is for storing data, programs, and the like. Using the display unit 4300 and the operations/input unit 5000 allows a user to operate the survey machine 1000.

The electrical configuration is essentially the same as that of the first embodiment, except that the image acquisition device 100 is included. Further detailed description of the electrical configuration is therefore omitted.

Next, operation of the example is described hereunder in accordance with Fig. 9.

First, in step S91, a target mark 2000a, 2000b, 2000c, 2000d, 2000e, or 2000f is rested in at least six positions on an object to be measured (hereinafter, referred to as the measurement target 10000). The six positions are taken as pass points. After being rested, the target marks are surveyed.

In following step S92, the target marks 2000a to 2000f, together with the measurement target 10000, are photographed from at least two directions (left/right) using digital cameras 3000.

In next step S81, relative orientation is conducted using the collimation points (pass points) that were obtained in step S91. In S81, relationships between inclinations, scaling coefficients, and other parameters of the stereographic images acquired by the digital cameras 3000 can be calculated from the pass points.

Next, in step S82, deviation-correcting images are created to associate the pass points of the stereographic images. A projective transformation is conducted to create the deviation-correcting images in step S82. The projective transformation refers to such a transformation in which photograph coordinates at a point on a light-receiving element of one digital camera 3000 are projected onto other planes. In this case, feature points are extracted from one image and then the other image is scanned for tie points on the same horizontal line.

There is a need, therefore, to translate the digital cameras 3000 in a horizontal direction and transform images into the resulting images. That is to say, the images used need to be transformed into the images appearing as if they had been acquired by translating the digital cameras 3000. Such transformation makes it possible to search for tie points even in the images obtained by moving naturally the digital cameras 3000. Furthermore, pass points are generated manually or automatically in step S83.

In step S84, stereo matching is conducted. Stereo matching is a method for automatically searching for tie points in the two acquired images.

In next step S85, the relationship in relative position between the digital cameras 3000 that acquired the images from the respective (left/right) directions can be derived using the tie points that were searched for in step S84. The above, in turn, makes it possible to define a three-dimensional coordinate system with an optical axis of the left camera as its center, and hence to define a three-dimensional coordinate system with an optical axis of one digital camera 3000 as its center.

Next, in step S86, the coordinate positions of the pass points that were obtained during surveying with the survey machine 1000 are assigned to the model coordinate system that was obtained from the relative orientation, and then this model coordinate system is transformed into a terrestrial coordinate system by conducting absolute orientation.

The absolute orientation here is an operation of transforming the model coordinate system that was obtained from the relative orientation, into a terrestrial coordinate system. The transformation can be conducted by assigning terrestrially measured three-dimensional coordinate data to the points on the images.

In next step S87, data is transformed into three-dimensional data of the terrestrial coordinate system. The three-dimensional data can be used, for example, to display ortho-images that are to be expanded into terrestrial image form.

The ortho-images are described here. Whereas the camera-obtained photographs are central projection photographs, the central projection photographs further generated by oblique orthogonal projection are called orthophotos. Each of the central projection photographs was obtained through a lens. Unlike a scale of a map, therefore, that of the entire photograph is not uniform. The orthophotos, however, are uniform in scale since they were generated by oblique orthogonal projection, and can therefore be handled similarly to maps.

The images acquired by the digital cameras 3000 are constructed from data of small pixel units, and coordinates are assigned to each of the pixels by relative orientation and absolute orientation. Two-dimensional displays on a display apparatus or the like are shaded according to three-dimensional coordinates. During coordinate conversion, coordinates in pixel units are newly calculated and then displayed in the form of operation such as rotation.

As described above, the present embodiment relates to a three-dimensional survey system capable of making stereographic displays by computing three-dimensional coordinate data with the survey machine 1000 and the digital cameras 3000.

The present invention thus constructed has: a survey apparatus for measuring a position of a collimation target from distance and angle data; image acquisition devices each for acquiring images of an object to be measured, inclusive of an image of the collimation target, from different plural directions; and arithmetic processing means that matches, by using the collimation target as a tie point, the images that have been acquired by the image acquisition devices, relates the collimation target position that has been measured by the survey apparatus, and the collimation target in each of the matched images, and computes three-dimensional coordinate data of the object to be measured, in accordance with above-related data.

The present invention is therefore effective in that it can obtain three-dimensional coordinate data conveniently and accurately.

Industrial Applicability

The present invention relates to three-dimensional survey systems (and like systems) for computing three-dimensional coordinate data using a survey apparatus and image acquisition devices, and more particularly, to a three-dimensional survey system capable of making stereographic displays by determining positions of tie points using a survey apparatus.

**Claims**

1. A three-dimensional survey system, comprising:

   a survey apparatus (1000) for measuring a position of a collimation target (2000) from distance and angle; image acquisition devices (3000, 100) each for acquiring images of an object to be measured, inclusive of an image of the collimation target (2000), from different plural directions; and arithmetic processing means (4000) that matches, by using the collimation target (2000) as a tie point, the images that have been acquired by said image acquisition devices (3000, 100), relates the collimation target position that has been measured by said survey apparatus (1000), and the collimation target (2000) in each of the matched images, and computes three-dimensional coordinate data of the object to be measured based on the related target data (3000, 100), **characterized in that**:

   said survey apparatus (1000) when placed at a known point is configuired to measure positions of at least six collimation targets (2000); and said arithmetic processing means (4000) is configured to perform corrections for inclinations or rotational angle errors of said image acquisition devices (3000, 100), and is configured to calculate positions thereof from not only the positions of the collimation targets (2000), but also the images acquired from said image acquisition devices (3000,100), and is further configured to compute three-dimensional coordinate data of the object to be measured, the coordinate data having been acquired by said image acquisition devices (3000, 100).

2. The three-dimensional survey system according to claim 1, further comprising:

   a survey apparatus (1000) for acquiring images inclusive of an image of the collimation target (2000); and arithmetic processing means (4000) that further matches the images that have been acquired by said survey apparatus (1000).

3. A three-dimensional survey method, comprising:

   a first step of measuring a position of a collimation target (2000) from distance data and angle data by means of a survey apparatus (1000); a second step of acquiring images, inclusive of an image of the collimation target (2000), from different directions by using a plurality of image acquisition devices (3000, 100); a third step of matching, by using the collimation target (2000) as a tie point, the images acquired by the image acquisition devices (3000, 100); a fourth step of relating the collimation target position measured by the survey apparatus (1000) in said first step, and the collimation target (2000) in each of the matched images; and a fifth step of computing three-dimensional coordinate data on the object to be measured based on the data related in said fourth step **characterized in that**:

said survey apparatus (1000) placed at a known point measures positions of at least six collimation targets (2000); and

said arithmetic processing means (4000) performs corrections for inclinations or rotational angle errors of said image acquisition devices (3000, 100), and calculates positions thereof from not only the positions of the collimation targets (2000), but also the images acquired from said image acquisition devices (3000, 100), and computes three-dimensional coordinate data of the object to be measured, the coordinate data having been acquired by said image acquisition devices (3000, 100).

4. An electronic storage medium formed as an FD, CD, DVD, RAM, ROM, memory card, or the like, said storage medium having a program stored therein to lay down procedural steps of:

reading both distance data and angle data of the collimation target (2000) measured by a survey apparatus (1000);

reading image data inclusive of the collimation target (2000) photographed from different directions by a plurality of image acquisition devices (3000, 100);

matching the images acquired by the survey apparatus (1000), and the images acquired by the image acquisition devices (3000, 100);

further matching, by use of the collimation target (2000) as a tie point, the images acquired by the image acquisition devices (3000, 100);

relating the collimation target position measured by the survey apparatus (1000), and the collimation target (2000) in each of the matched images; and

computing three-dimensional coordinate data of the object to be measured, in accordance with the related target data **characterized in that**:

said survey apparatus (1000) placed at a known point measures positions of at least six collimation targets (2000); and

said arithmetic processing means (4000) performs corrections for inclinations or rotational angle errors of said image acquisition devices (3000, 100), and calculates positions thereof from not only the position of the collimation targets (2000), but also the images acquired from said image acquisition devices (3000, 100), and computes three-dimensional coordinate data of the object to be measured, the coordinate data having been acquired by said image acquisition device (3000, 100).

**Patentansprüche**

1. Ein dreidimensionales Erfassungssystem, umfassend:

eine Erfassungsvorrichtung (1000) zum Messen einer Position eines Kollimationsziels (2000) aus einer Entfernung und einem Winkel;

Bildaufnahmevorrichtungen (3000, 100) jeweils zum Aufnehmen von Bildern von einem zu messenden Objekt inklusive eines Bildes des Kollimationsziels (2000) aus mehreren verschiedenen Richtungen; und

ein arithmetisches Bearbeitungsmittel (4000), welches unter Verwendung des Kollimationsziels (2000) als einen Anschlusspunkt die Bilder zusammenfügt, die durch die Bildaufnahmevorrichtungen (3000, 100) aufgenommen wurden, und welches die Kollimationszielposition, die durch die Erfassungsvorrichtung (1000) gemessen wurde, und das Kollimationsziel (2000) in jedem der zusammengefügten Bilder verbindet, und welches dreidimensionale Koordinatendaten des zu messenden Objekts auf Grundlage der betreffenden Zieldaten (3000, 100) berechnet, **dadurch gekennzeichnet, dass**:

die Erfassungsvorrichtung (1000), wenn sie an einem bekannten Punkt angeordnet ist, gestaltet ist, um Positionen von zumindest sechs Kollimationszielen (2000) zu messen; und

wobei das arithmetische Verarbeitungsmittel (4000) gestaltet ist, um Korrekturen für Neigungs- oder Rotationswinkelfehler der Bildaufnahmevorrichtungen (3000, 100) durchzuführen, und gestaltet ist, um Positionen daraus nicht nur aus den Positionen der Kollimationsziele (2000), sondern auch aus den Bildern, die von den Bildaufnahmevorrichtungen (3000, 100) aufgenommen wurden, zu berechnen, und weiterhin gestaltet ist, um dreidimensionale Koordinatendaten des zu messenden Objekts zu berechnen, wobei die Koordinatendaten durch die Bildaufnahmevorrichtungen (3000, 100) aufgenommen wurden.

2. Dreidimensionales Erfassungssystem nach Anspruch 1, weiterhin umfassend:

eine Erfassungsvorrichtung (1000) zum Aufnehmen von Bildern inklusive eines Bildes des Kollimationsziels (2000); und
ein arithmetisches Verarbeitungsmittel (4000), welches weiterhin die Bilder zusammenfügt, die durch die Erfassungsvorrichtung (1000) aufgenommen wurden.

3. Dreidimensionales Erfassungsverfahren, umfassend:

einen ersten Schritt des Messens einer Position eines Kollimationsziels (2000) aus Entfernungsdaten und Winkeldaten mittels einer Erfassungsvorrichtung (1000);
einen zweiten Schritt des Aufnehmens von Bildern inklusive eines Bildes des Kollimationsziels (2000) aus verschiedenen Richtungen unter Verwendung einer Vielzahl von Bildaufnahmevorrichtungen (3000, 100);
einen dritten Schritt des Zusammenfügens der Bilder unter Verwendung des Kollimationsziels (2000) als einen Anschlusspunkt, wobei die Bilder durch die Bildaufnahmevorrichtung (3000, 100) aufgenommen wurden;
einen vierten Schritt des Inbeziehungsetzens der Kollimationszielposition, die durch die Erfassungsvorrichtung (1000) in dem ersten Schritt gemessen wurde, und des Kollimationsziels (2000) in jedem der zusammengefügten Bilder; und
einen fünften Schritt des Berechnens von dreidimensionalen Koordinatendaten auf dem zu messenden Objekt auf Grundlage der Daten, die sich auf den vierten Schritt beziehen,
**dadurch gekennzeichnet, dass**:

die Erfassungsvorrichtung (1000), die an einem bekannten Punkt angeordnet ist, die Positionen von zumindest sechs Kollimationszielen (2000) misst; und
das arithmetische Verarbeitungsmittel (4000) Korrekturen für Neigungs- oder Rotationswinkelfehler der Bildaufnahmevorrichtungen (3000, 100) durchführt, und Positionen davon nicht nur aus den Positionen der Kollimationsziele (2000), sondern auch aus den Bildern, die durch die Bildaufnahmevorrichtungen (3000, 100) aufgenommen wurden, berechnet, und dreidimensionale Koordinatendaten des zu messenden Objekts berechnet, wobei die Koordinatendaten durch Bildaufnahmevorrichtungen (3000, 100) aufgenommen wurden.

4. Elektronisches Speichermedium in Form einer FD, CD, DVD, RAM, ROM, Speicherkarte oder Ähnlichem, wobei das Speichermedium ein darin gespeichertes Programm aufweist, um die folgenden Verfahrensschritte aufzuweisen:

Lesen sowohl der Entfernungsdaten als auch der Winkeldaten des Kollimationsziels (2000), welche durch eine Erfassungsvorrichtung (1000) gemessen wurden;
Lesen von Bilddaten inklusive des Kollimationsziels (2000), welche aus verschiedenen Richtungen durch eine Vielzahl von Bildaufnahmevorrichtungen (3000, 100) fotografiert wurden;
Zusammenfügen der Bilder, die durch die Erfassungsvorrichtung (1000) aufgenommen wurden, und der Bilder, die durch die Bildaufnahmevorrichtungen (3000, 100) aufgenommen wurden;
weiteres Zusammenfügen der Bilder, die durch die Bildaufnahmevorrichtungen (3000, 100) unter Verwendung des Kollimationsziels (2000) als einen Anschlusspunkt aufgenommen wurden;
Inbeziehungsetzen der Kollimationszielposition, die durch die Erfassungsvorrichtung (1000) gemessen wurde, und des Kollimationsziels (2000) in jedem der zusammengefügten Bilder; und
Berechnung von dreidimensionalen Koordinatendaten des zu messenden Objekts in Übereinstimmung mit den betreffenden Zieldaten,
**dadurch gekennzeichnet, dass**:

die Erfassungsvorrichtung (1000), die an einem bekannten Punkt angeordnet ist, die Positionen von zumindest sechs Kollimationszielen (2000) misst; und
das arithmetische Verarbeitungsmittel (4000) Korrekturen von Neigungs- oder Rotationswinkelfehlern der Bildaufnahmevorrichtungen (3000, 100) durchführt, und Positionen davon nicht nur auf Grundlage der Position der Kollimationsziele (2000), sondern auch auf Grundlage der Bilder, die von den Bildaufnahmevorrichtungen (3000, 100) aufgenommen wurden, berechnet, und dreidimensionale Koordinatendaten des zu messenden Objekts berechnet, wobei die Koordinatendaten durch die Bilderfassungsvorrichtung (3000, 100) aufgenommen wurden.

**Revendications**

1. Un système d'arpentage tridimensionnel, comprenant :

   un équipement d'arpentage (1000) pour mesurer une position d'une cible de collimation (2000) à partir d'une distance et d'un angle ;
   des dispositifs d'acquisition d'images (3000, 100) pour acquérir chacun des images d'un objet à mesurer, y compris une image de la cible de collimation (2000), suivant une pluralité de directions différentes ; et
   des moyens de traitement arithmétique (4000) qui associent, par utilisation de la cible de collimation (2000) comme point de concordance, les images qui ont été acquises par lesdits dispositifs d'acquisition d'images (3000, 100), mettent en relation la position de la cible de collimation qui a été mesurée par ledit équipement d'arpentage (1000) avec la cible de collimation (2000) sur chacune des images associées, et calculent des données de coordonnées tridimensionnelles de l'objet à mesurer en fonction des données de cible mise en relation (3000, 100), **caractérisé en ce que** :

   ledit équipement d'arpentage (1000), lorsqu'il est placé en un point connu, est configuré pour mesurer les positions d'au moins six cibles de collimation (2000) ; et
   lesdits moyens de traitement arithmétique (4000) sont configurés pour exécuter des corrections des inclinaisons ou des erreurs d'angle de rotation desdits dispositifs d'acquisition d'images (3000, 100) et sont configurés pour calculer les positions de ceux-ci non seulement à partir des positions des cible de collimation (2000), mais également à partir des images acquises par lesdits dispositifs d'acquisition d'images (3000, 100), et sont en outre configurés pour calculer les données de coordonnées tridimensionnelles de l'objet à mesurer, les données de coordonnées ayant été acquises par lesdits dispositifs d'acquisition d'images (3000, 100).

2. Le système d'arpentage tridimensionnel de la revendication 1, comprenant en outre :

   un équipement d'arpentage (1000) pour acquérir des images y compris une image de la cible de collimation (2000) ; et
   des moyens de traitement arithmétique (4000) qui associent également les images qui ont été acquises par ledit équipement d'arpentage (1000).

3. Un procédé d'arpentage tridimensionnel, comprenant :

   une première étape de mesure d'une position d'une cible de collimation (2000) à partir de données de distance et de données d'angle au moyen d'un équipement d'arpentage (1000) ;
   une seconde étape d'acquisition d'images, y compris d'une image de la cible de collimation (2000), suivant des directions différentes en utilisant une pluralité de dispositifs d'acquisition d'images (3000,100) ;
   une troisième étape d'association, par utilisation de la cible de collimation (2000) comme point de concordance, des images acquises par les dispositifs d'acquisition d'images (3000, 100) ;
   une quatrième étape de mise en relation de la position de la cible de collimation mesurée par l'équipement d'arpentage (1000) à ladite première étape avec la cible de collimation (2000) sur chacune des images associées ; et
   une cinquième étape de calcul de données de coordonnées tridimensionnelles sur l'objet à mesurer en fonction des données mises en relation à ladite quatrième étape,
   **caractérisé en ce que** :

   ledit dispositif d'arpentage (1000) placé en un point connu mesure les positions d'au moins six cibles de collimation (2000) ; et
   lesdits moyens de traitement arithmétique (4000) exécutent des corrections des inclinaisons ou des erreurs d'angle de rotation desdits dispositifs d'acquisition d'images (3000, 100) et calculent les positions de ceux-ci non seulement à partir des positions des cibles de collimation (2000), mais également des images acquises par lesdits dispositifs d'acquisition d'images (3000, 100), et calculent des données de coordonnées tridimensionnelles de l'objet à mesurer, les données de coordonnées ayant été acquises par lesdits dispositifs d'acquisition d'images (3000, 100).

4. Un support électronique de stockage en forme de disquette, de CD, de DVD, de RAM, de ROM, de carte mémoire ou analogue, ledit support de stockage ayant stocké dessus un programme pour exécuter les étapes de processus de :

lecture à la fois de données de distance et de données d'angle de la cible de collimation (2000) mesurées par un équipement d'arpentage (1000) ;

lecture de données d'image y compris de la cible de collimation (2000) photographiée suivant des directions différentes par une pluralité de dispositifs d'acquisition d'images (3000, 100) ;

association des images acquises par l'équipement d'arpentage (1000) et des images acquises par les dispositifs d'acquisition d'images (3000, 100) ;

autre association, par utilisation de la cible de collimation (2000) en tant que point de concordance, des images acquises par les dispositifs d'acquisition d'images (3000, 100) ;

mise en relation de la position de la cible de collimation mesurée par l'équipement d'arpentage (1000) avec la cible de collimation (2000) sur chacune des images rapprochées ; et

calcul de données de coordonnées tridimensionnelles de l'objet à mesurer, conformément aux données de cible mises en relation,

**caractérisé en ce que** :

ledit dispositif d'arpentage (1000) placé en un point connu mesure les positions d'au moins six cibles de collimation (2000) ; et

lesdits moyens de traitement arithmétique (4000) exécutent des corrections des inclinaisons ou des erreurs d'angle de rotation desdits dispositifs d'acquisition d'images (3000, 100) et calculent les positions de ceux-ci non seulement à partir des positions des cibles de collimation (2000), mais également des images acquises par lesdits dispositifs d'acquisition d'images (3000, 100), et calculent des données de coordonnées tridimensionnelles de l'objet à mesurer, les données de coordonnées ayant été acquises par lesdits dispositifs d'acquisition d'images (3000, 100).

Scaling coefficient

X-axis rotation

Y-axis rotation

Z-axis rotation

F I G . 1

F I G . 2

F I G . 3

F I G . 4

13

F I G . 5

EP 1 655 573 B1

Scaling coefficient

X-axis rotation

Y-axis rotation

Z-axis rotation

F I G . 6

F I G . 7

VERTICAL-ANGLE MEASURING SECTION — 1140

HORIZONTAL-ANGLE MEASURING SECTION — 1420

STORAGE UNIT — 4200

OPERETION/INPUT UNIT — 5000

CONTROL AND ARITHMETIC UNIT — 4000

DISPLAY UNIT — 4300

HORIZONTAL DRIVE — 1410

VERTICAL DRIVE — 1420

IMAGING CIRCUIT — 120

IMAGING PICKUP ELEMENT — 110

DISTANCE MEASURING UNIT — 1100

LIGHT-RECEIVING SECTION — 1120

LIGHT-EMITTING SECTION — 1110

PRISM

F I G . 8

16

WHEN A KNOWN POINT IS PRESENT ON THE IMAGE

S91 — SURVEY AT LEAST 6 DATUM
POINTS (PASS POINTS)

S92 — ACQUIRE IMAGES FROM 2 PHOTOGRAPHING
LOCATIONS (DATUM POINTS INCLUDED)

IMAGE COORDINATE SYSYTEM

S81 — RELATIVE ORIENTATION
(CALCULATE THE INCLINATIONS AND
SCALING COEFFICIENTS OF THE
PHOTOGRAPHING CAMERAS FROM THE
PASS POINTS)

S82 — CREATE DEVIATION-CORRECTING IMAGES
(STEREO GRAPHIC IMAGES)

S83 — GENERATE PASS POINTS
(MANUARRY OR AUTOMATICALLY)

S84 — STEREO MATCHING
(ASSOCIATING 2 IMAGES)

S85 — THREE-DIMENSIONAL DATE OF THE
IMAGE COORDINATE SYSYTEM

S86 — ABSOLUTE ORIENTATION
(TRANSFORM FROM DATUM POINT
COORDINATES INTO TERRESTRIAL
COORDINATES:3 POINTS OF DATA
SUFFICES)

S87 — THREE-DIMENSIONAL DATE OF THE
TERRESTRIAL COORDINATE SYSYTEM

F I G . 9

**EP 1 655 573 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1219925 A2
- US 2003048438 A1